# EUROPÄISCHE PATENTSCHRIFT

(11) **EP 0 941 775 B1**
(45) Veröffentlichungstag und Bekanntmachung des Hinweises auf die Patenterteilung: **26.10.2005**
(21) Anmeldenummer: 99103616.1
(22) Anmeldetag: 25.02.1999
(51) Int. Cl.: B07C 5/342, B65B 19/28, G01N 21/88

(54) **Verfahren und Vorrichtung zum optischen Prüfen von Packungen**
Method and device for optically inspecting packages
Méthode et dispositif pour examiner optiquement des paquets

(30) Priorität: 02.03.1998 DE 19808471; 02.09.1998 DE 19839852
(43) Veröffentlichungstag der Anmeldung: 15.09.1999
(73) Patentinhaber: Focke & Co. (GmbH & Co. KG), 27283 Verden (DE)
(72) Erfinder: Focke, Heinz, 27283 Verden (DE); Czarnotta, Michael, 28279 Bremen (DE)
(74) Vertreter: Bolte, Erich

(56) Entgegenhaltungen:
- EP-A- 0 330 495
- EP-A- 0 362 679
- EP-A- 0 523 441
- US-A- 4 589 141
- US-A- 4 736 851
- US-A- 4 976 356
- US-A- 5 189 708

## Beschreibung

Verfahren zum Prüfen von Packungen, insbesondere Zigaretten-Packungen, hinsichtlich korrekter Ausgestaltung des äußeren Erscheinungsbildes, wobei die Packungen durch einen Förderer entlang einer Prüfstrecke transportiert werden und ortsfeste Prüforgane, insbesondere an mindestens einer Kamera, vorbeibewegt und fehlerhafte Packungen im Anschluss an die Prüforgane durch einen Auswerfer aus dem Förderweg der Packungen ausgesondert werden und wobei die Prüforgane taktweise aktiviert werden zum Erfassen jeweils einer an den Prüforganen vorbeibewegten Packung, wobei die Prüforgane durch einen Aktivierungssensor eingeschaltet werden, der durch die zu überprüfende Packung wird. Weiterhin betrifft die Erfindung eine Vorrichtung zur Durchführung des Verfahrens.

Bei der Fertigung von hochwertigen Packungen, insbesondere Zigaretten-Packungen, soll trotz hoher Leistung der Verpackungsmaschinen das korrekte äußere Erscheinungsbild der (Zigaretten-)Packungen gewährleistet sein. Zu diesem Zweck ist es bekannt, die fertiggestellten Packungen einer Prüfung des äußeren Erscheinungsbildes zu unterziehen und Packungen mit fehlerhaftem Aufdruck und/oder fehlerhafter konstruktiver Gestaltung auszusondern.

Zur Prüfung der Packungen werden als Prüforgane vorzugsweise Kameras eingesetzt, die das äußere Bild der zu prüfenden Packung aufnehmen und in einer Auswerteeinheit mit der gespeicherten Abbildung einer korrekten Packung vergleichen. Die Auswerteeinheit betätigt ggf. einen (mechanischen) Auswerfer für eine etwaige Fehlpackung (EP-A-0 330 495). Die Prüfung der Packungen findet während des vorzugsweise kontinuierlichen Transports derselben statt.

Die Prüforgane, insbesondere die Kamera(s), sind taktweise aktivierbar zum Erfassen jeweils einer an den Prüforganen vorbeibewegten Packung, wobei die Prüforgane durch einen Aktivierungssensor einschaltbar sind, der durch die zu prüfende Packung beaufschlagt wird.

Damit wird sichergestellt, dass die Prüforgane, insbesondere Kameras, exakt in dem Moment aktiviert bzw. eingeschaltet sind, in dem die Packung eine optimale Position zu den Kameras oder dergleichen einnimmt. Gleichzeitig oder alternativ kann auch eine entsprechende Beleuchtung eingeschaltet werden, so dass trotz kontinuierlicher, hoher Fördergeschwindigkeit der Packungen ein präzises Bild derselben aufgenommen wird. Der Aktivierungssensor ist vorzugsweise eine Lichtschranke, durch die die zu prüfende Packung hindurchbewegt wird.

Der Erfindung liegt die Aufgabe zugrunde, bei einem derartigen Verfahren zum Prüfen von (Zigaretten-)Packungen sicherzustellen, dass ein präzises Bild der Packung trotz hoher Fördergeschwindigkeit aufgenommen werden kann.

Zur Lösung dieser Aufgabe ist das erfindungsgemäße Verfahren dadurch gekennzeichnet, dass der Auswerfer durch einen Fehlersensor betätigt wird, der durch eine an dem Fehlersensor vorbeibewegte fehlerhafte Packung beaufschlagt wird, wobei der Auswerfer mit einer zeitlichen Verzögerung betätigt wird, die in Abhängigkeit von der Arbeitsgeschwindigkeit der Verpackungsmaschine veränderbar ist.

Eine erfindungsgemäße Vorrichtung weist die Merkmale des Anspruchs 6 auf.

Eine weitere Besonderheit der Erfindung besteht darin, dass der Fehlersensor für den Auswerfer mit einem "Auswertefenster" arbeitet, also mit einem Förderbereich der Packungen, derart, dass der Auswerfer - nach vorheriger Feststellung einer Fehlpackung - nur tätig wird, wenn die betreffende Packung innerhalb eines gewissen Zeitraums in dem Auswertefenster des Fehlersensors erscheint. Fehlt diese Voraussetzung, werden erfindungsgemäß mehrere aufeinanderfolgende Packungen, insbesondere drei Packungen, sicherheitshalber ausgesondert.

Die Kameras, die Sensoren und der Auswerfer sind in besonderer Weise angeordnet und werden in Abhängigkeit vom Maschinentakt gesteuert.

Weitere Einzelheiten der Erfindung werden nachfolgend anhand von Ausführungsbeispielen der Vorrichtung geschildert. Es zeigt:
- Fig. 1: eine Prüfvorrichtung für (Zigaretten-)Packungen in schematischer Seitenansicht,

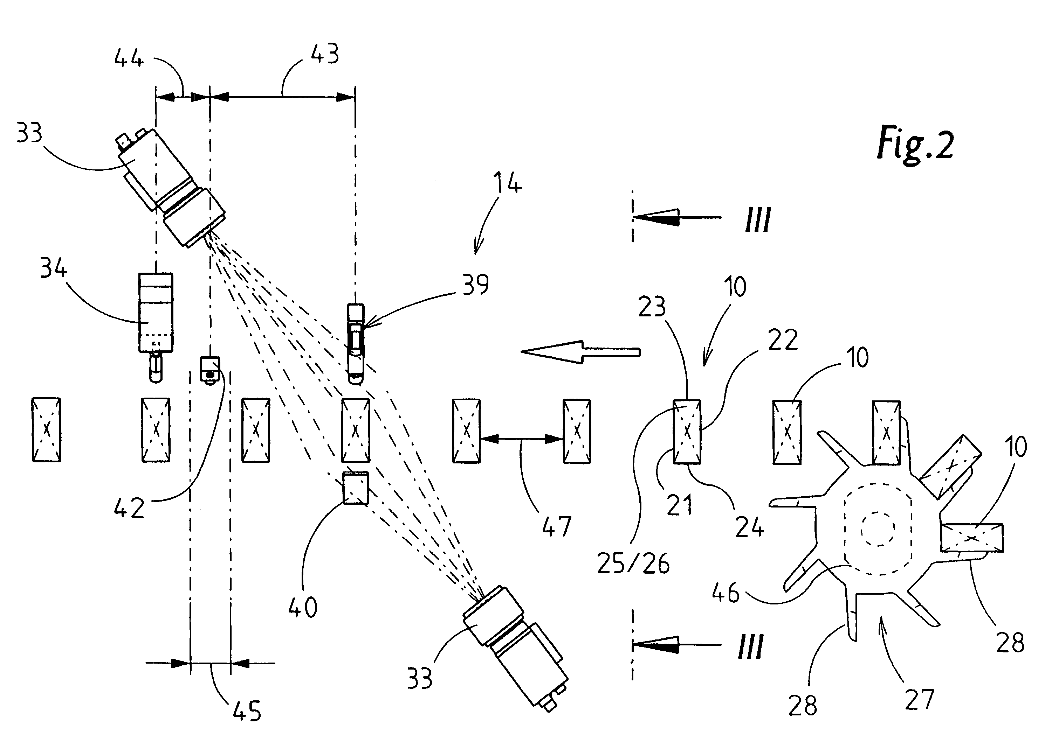

- Fig. 2: eine Darstellung der Vorrichtung gemäß Fig. 1 ohne Förderorgane,
- Fig. 3: eine Queransicht der Vorrichtung gemäß Fig. 2 in der Schnittebene III-III der Fig. 2, bei vergrößertem Maßstab,
- Fig. 4: eine schematische Darstellung der Steuerung eines Auswerfers,
- Fig. 5: eine weitere Prüfvorrichtung für (Zigaretten-) Packungen in schematischer Seitenansicht,
- Fig. 6: eine schematische Detailansicht des Übergangs zwischen einem Zuförderer und einer Prüfstrecke in der Schnittebene VI-VI der Fig. 5, bei vergrößertem Maßstab,
- Fig. 7: eine Queransicht der Darstellung gemäß Fig. 6 in der Schnittebene VII-VII der Fig. 6.

Die in den Zeichnungen dargestellten Einzelheiten betreffen die Prüfung von quaderförmigen Packungen 10, nämlich Zigaretten-Packungen. Diese kommen von einer Verpackungsmaschine bzw. von einem der Verpackungsmaschine zugeordneten Trockenrevolver (nicht gezeigt). Die Packungen 10 werden nacheinander in eine horizontale Förderstrecke 11 eingeführt. In deren Bereich findet die Prüfung der Packungen 10 während des Transports statt.

Die Förderstrecke 11 besteht aus mehreren Endlosförderern, die die Packungen 10 nacheinander übernehmen und weitergeben. Zwischen einem Zuförderer 12 und einem Abförderer 13 ist eine Prüfstrecke 14 gebildet. In deren Bereich werden Packungen 10 von einem Prüfförderer 15 transportiert.

Der Zuförderer 12 besteht aus einem endlosen, angetriebenen Obergurt 16 und einem ebenfalls angetriebenen, endlosen Untergurt 17. Obergurt 16 und Untergurt 17 weisen Mitnehmer 18 auf, die je eine Packung 10 an der Rückseite erfassen, so daß diese mit gleichen Abständen voneinander gefördert werden. Die Packungen 10 werden dabei zwischen einem Fördertrum 19 des Obergurts 16 und einem Fördertrum 20 des Untergurts 17 erfaßt. Die Relativstellung der Packungen ist derart, daß eine großflächige Vorderseite 21 und eine entsprechende Rückseite 22 in Förderrichtung nach vorn bzw. rückwärts weisen. Schmale, langgestreckte Seitenflächen 23, 24 liegen am oberen und unteren Fördertrum 19, 20 an. Stirnflächen 25, 26 sind seitwärts gerichtet.

In dieser Relativstellung werden die Packungen 10 von einem Vorförderer in den Bereich des Zuförderers 12 eingeführt, nämlich durch ein drehend angetriebenes Sternrad 27. Dieses erfaßt jeweils eine Packung mit annähernd radial gerichteten Mitnehmern und führt die Packung zwischen Fördertrum 19 und 20 ein.

Der Prüfförderer 15, der die Packungen 10 vom Zuförderer 12 übernimmt, besteht ausschließlich aus seitlichen, schmalen Gurten, insbesondere aus endlosen Rundschnüren 29, 30. Diese liegen mit einem Fördertrum an einander gegenüberliegenden, seitwärts gerichteten Flächen der Packungen 10, nämlich an den Stirnflächen 25 und 26. Die Relativstellung ist so gewählt, daß die Rundschnüre 29, 30 in einem oberen Querschnittsbereich der Packungen 10 an diesen anliegen. Die Rundschnüre 29, 30 laufen über seitliche Stützrollen 31.

Im Bereich des Prüfförderers 15 sind Prüforgane positioniert zum Erfassen des äußeren Bildes der Packungen 10 während des Transports. Es handelt sich dabei im vorliegenden Falle um Kameras 32, 33, die je oberhalb und unterhalb der Förderstrecke 11 bzw. des Prüfförderers 15 positioniert sind. Die Kameras 32, 33 sind in einer Schrägstellung angeordnet, und zwar derart, daß durch jede Kamera 32, 33 mindestens zwei Flächen einer Packung 10 erfaßt werden, nämlich im vorliegenden Falle eine Vorderseite 21 und eine Seitenfläche 23 bzw. eine Rückseite 22 und eine untere Seitenfläche 24. Die Kameras 32, 33 erfassen das äußere Erscheinungsbild, nämlich insbesondere die Bedruckung oder das Vorhandensein einer Steuerbanderole, aber auch konstruktive Fehlgestaltungen.

Fehlerhafte Packungen 10 werden im Anschluß an die Prüforgane im Bereich des Prüfförderers 15 ausgesondert, und zwar durch einen Auswerfer 34, der von oben auf die betreffende Packung 10 einwirkt und diese aus der Position zwischen den Rundschnüren 29, 30 nach unten ausstößt bzw. aushebelt in einen Auffangbehälter 35. Der Auswerfer 34 ist mit einem ausfahrbaren Stößel 36 versehen, der durch ein Druckmittel betätigt wird.

Die korrekt ausgebildeten Packungen 10 werden von dem Prüfförderer 15 an den Abförderer 13 übergeben. Dieser besteht wiederum aus einem oberen Fördergurt 37 und einem unteren Fördergurt 38. Zwischen diesen Fördergurten 37 und 38 werden die korrekten Packungen 10 ohne Veränderung der Relativlage abtransportiert.

Die optoelektronischen Prüforgane für die Packungen 10, also die Kameras 32, 33, sind nicht ständig aktiviert, sondern werden nur kurzzeitig für die Prüfung bzw. Abtastung einer vorbeitransportierten Packung 10 eingeschaltet. Die zu prüfende Packung 10 löst selbst ein Signal aus zur Aktivierung der Kameras 32, 33. Die Packung 10 wird zu diesem Zweck an einem Sensor vorbeibewegt, nämlich an einem neben der Bewegungsbahn der Packungen 10 positionierten Aktivierungssensor 39. Dieser wird von der zu prüfenden Packung 10 beaufschlagt. Der Aktivierungssensor 39 erzeugt ein Signal zum Einschalten bzw. Aktivieren der Kameras 32, 33 und ggf. einer Beleuchtung.

Der Aktivierungssensor 39 arbeitet mit einer Lichtschranke, die von der Packung 10 unterbrochen wird. Der Aktivierungssensor 39 besteht zu diesem Zweck aus Sender und Empfänger. Ein vom Sender ausgegebener Lichtstrahl wird von einem auf der gegenüberliegenden Seite der Bewegungsbahn der Packungen 10 angeordneten Spiegel 40 reflektiert und von dem Empfänger aufgenommen.

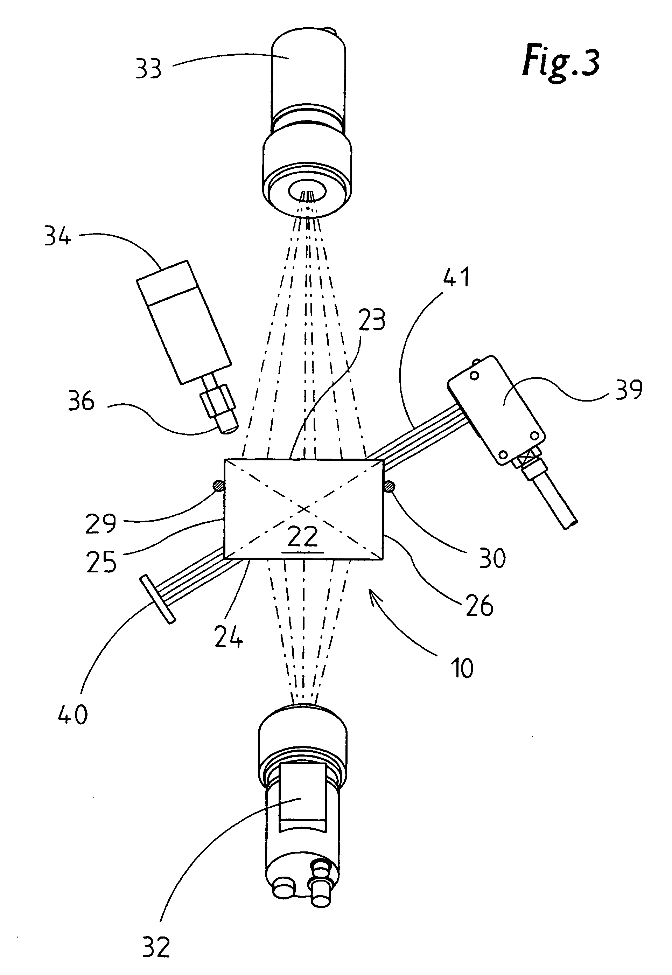

Wie aus Fig. 3 ersichtlich, sind Aktivierungssensor 39 und Spiegel 40 in besonderer Weise relativ zur Bewegungsbahn der Packungen 10 positioniert, nämlich derart, daß der Lichtstrahl 41 in Richtung einer Diagonale der in Förderrichtung weisenden großen Flächen, nämlich Vorderseite 21 und Rückseite 22, gerichtet ist. Der Aktivierungssensor 39 ist dabei oberhalb der Bewegungsbahn und der Spiegel 40 unterhalb derselben angeordnet oder umgekehrt. Durch diese Positionierung des Aktivierungssensors 39 bzw. des Lichtstrahls 41 ist sichergestellt, daß auch bei etwaigen Schräg- oder Versatzstellungen der Packungen 10 eine Betätigung der Kameras 32, 33 ausgelöst wird, wenn ein in Förderrichtung ggf. vorstehender Bereich der Packung 10 in den Bereich des Lichtstrahls 41 gelangt.

Alternativ können Sender und Empfänger des Aktivierungssensors 39 auch räumlich getrennt voneinander angeordnet sein. In diesem Fall kommt man ohne einen Spiegel 40 aus. Anstelle des Spiegels 40 ist dann der Empfänger gegenüber dem im Aktivierungssensor 39 angeordneten Sender angeordnet.

Eine weitere Besonderheit liegt in der Betätigung des Auswerfers 34. Diesem ist ebenfalls ein Sensor zugeordnet, nämlich ein Fehlersensor 42. Auch der Fehlersensor 42 arbeitet auf der Grundlage einer Lichtschranke, wobei das Licht von der vorbeibewegten Packung 10 reflektiert wird.

Der Fehlersensor 42 ist zwischen dem Aktivierungssensor 39 und dem Auswerfer 34 angeordnet, und zwar mit vorgegebenen Abstand 44 von diesem Auswerfer. Der Fehlersensor 42 löst nach vorheriger Identifizierung einer Fehlpackung den Auswerfer 34 aus.

Das Zusammenspiel der Prüf- und Aussonderorgane ist so gestaltet, daß der Fehlersensor 42 eine Doppelfunktion übernimmt. Der Fehlersensor 42 ist ständig eingeschaltet und kontrolliert so die vorbei laufenden Packungen 10, also auch korrekt ausgebildete Packungen 10. Der Fehlersensor 42 prüft dabei, ob die Packungen 10 mit den vorgegebenen Abständen transportiert werden.

Wenn durch die Prüforgane, nämlich Kameras 32, 33, eine fehlerhafte Packung 10 festgestellt wird, geht ein entsprechendes Betätigungssignal an den Auswerfer 34. Sobald nun diese fehlerhafte Packung 10 an dem Fehlersensor 42 vorbeigefördert wird, erzeugt der Fehlersensor 42 ein Auslösesignal für den Auswerfer 34. Dieser wird - mit einer gewissen Verzögerung, die dem Abstand 44 entspricht oder zum Berücksichtigen evtl. Totzeiten, bspw. des Auswerfers 34, etwas kürzer ist - aktiv und stößt die Packung 10 aus dem Bereich des Prüfförderers 15 aus.

Zur Sicherstellung der Funktionsabläufe ist ein bestimmter Abstand 43 zwischen dem Aktivierungssensors 39 und dem Fehlersensor 42 gegeben. Durch diesen Abstand 43 ist die Zeit bestimmt, die die ggf. im Bereich des Aktivierungssensors 39 festgestellte fehlerhafte Packung 10 bei einer bestimmten Maschinendrehzahl bzw. -geschwindigkeit benötigt, um in den Bereich des Fehlersensors 42 zu gelangen.

Den Abstand 43 kann man - wie nachfolgend erläutert - auch in einem Maschinendrehwinkel bzw. Maschinentakt ausdrücken. Ein bestimmtes, bspw. mit dem Antrieb verbundenes Rad der Maschine läuft als Referenzrad. Es ist an den Arbeitstakt bzw. Geschwindigkeit der Maschine gekoppelt und hat einen definierten Durchmesser. Daher kann anhand des Drehwinkels dieses Rades der Vorschub einer Packung ermittelt werden. Ebenso kann man anhand der Drehgeschwindigkeit des Rades auf die Fördergeschwindigkeit der Maschine schließen. Der Abstand 43 bestimmt daher nicht nur eine Zeitdauer, sondern auch einen bestimmten Maschinentakt bzw. Drehwinkel der Maschine.

Der Fehlersensor 42 wiederum ist mit einem ebenfalls vorbestimmten Abstand 44 dem Auswerfer 34 vorgeordnet. Hieraus ergibt sich die Verzögerung beim Betätigen des Auswerfers 34, um sicherzustellen, daß die fehlerhafte Packung 10 nach Erkennung durch den Fehlersensor 42 ausgestoßen wird.

Der Fehlersensor 42 arbeitet mit einem Auswertefenster 45. Dieses bildet einen Toleranzbereich für die ankommenden Packungen oder die Betätigung des Auswerfers 34. Der Fehlersensor 42 erzeugt ein Betätigungssignal für den Auswerfer 34, wenn eine (fehlerhafte) Packung 10 im Bereich des Auswertefensters 45, oder zeitlich gesehen in einem entsprechenden Zeitfenster, erscheint. Wird hingegen - nach entsprechender Ankündigung durch die Auswerteeinheit - eine fehlerhafte Packung 10 nicht nach einem - einem vorgegebenen Maschinendrehwinkel bzw. Maschinentakt entsprechenden - Weg oder einer vorgegebenen Zeit innerhalb des Auswertefensters 45 erkannt, besteht die Gefahr, daß die Packungen 10 nicht in korrekten Abständen transportiert worden sind. In diesem Falle wird aus Sicherheitsgründen eine größere Anzahl von Packungen 10, vorzugsweise drei aufeinanderfolgende Packungen 10, durch den Auswerfer 34 ausgesondert. Dabei wird unterstellt, daß auf diese Weise zuverlässig auch die tatsächlich fehlerhafte Packung 10 erfaßt und ausgesondert worden ist.

Die Arbeitsweise der Prüforgane und des Auswerfers wird in Abhängigkeit vom Maschinentakt gesteuert. Zu diesem Zweck ist dem Sternrad 27 ein Winkelschrittgeber 46 zugeordnet, der ein exaktes Signal korrespondierend zu einem mit der Verpackungsmaschine mitlaufenden Organ, bspw. einem Fördertrum 19, 20 oder einer Rundschnur 29, 30, bzw. in Abhängigkeit von der aktuellen Arbeitsgeschwindigkeit der Verpackungsmaschine erzeugt und damit die aktuelle Fördergeschwindigkeit der Packungen 10 im Bereich der Prüfstrecke 14 wiedergibt. Das Sternrad 27 ist mit dem Antrieb der Verpackungsmaschine verbunden. Die Drehgeschwindigkeit entspricht ständig der Arbeitsgeschwindigkeit der Verpackungsmaschine.

Der Fehlersensor 42 erfüllt eine Doppelfunktion und ist zu diesem Zweck ständig aktiv. Zum einen wird, wie beschrieben, der Auswerfer 34 zeitgenau betätigt zum Aussondern einer fehlerhaften Packung 10. Zum anderen wird aber durch den Fehlersensor 42 ständig der korrekte Transport der Packungen 10 überwacht, nämlich hinsichtlich des Abstands 47 der Packungen voneinander. Der Fehlersensor 42 ist darauf eingestellt, daß die Packungen 10 in bestimmten Weg- bzw. Zeitabständen vorbeibewegt werden, nach Maßgabe der durch den Winkelschrittgeber 46 vorgegebenen Weges bzw. Arbeitsgeschwindigkeit der Verpackungsmaschine. Wenn die Weg- bzw. Zeitabstände - unter Berücksichtigung eines Toleranzbereichs - nicht eingehalten werden, wird davon ausgegangen, daß der Transport der Packungen 10 im Bereich der Förderstrecke 11 nicht korrekt verläuft.

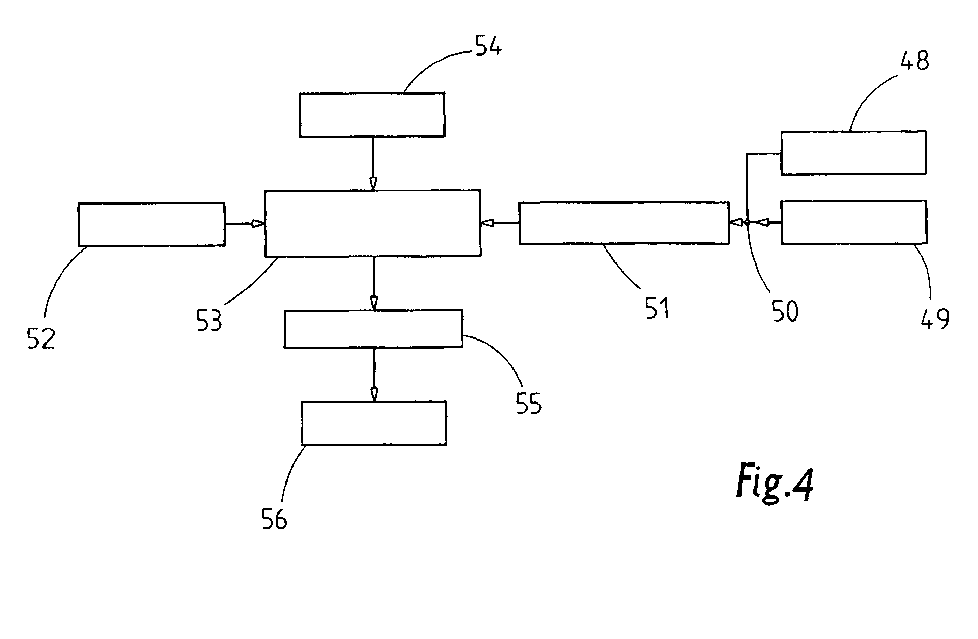

Fig. 4 zeigt die Steuerung des Auswerfers 34. Der Winkelschrittgeber 46 liefert proportional zur Arbeitsgeschwindigkeit der Verpackungsmaschine einen Meßwert 48 von Impulsen pro Sekunde. Dieser Meßwert 48 wird mit einem eingestellten Parameter der Reaktionszeit 49 des Auswerfers 34 in Millisekunden verrechnet und zwar durch Multiplikation im Multiplizierer 50. Dieses Produkt wird außerdem noch durch Tausend geteilt, so daß man einen Korrekturwert 51 erhält. Dieser Korrekturwert 51 wird von einem den Weg zwischen dem Auswerfer 34 und dem Fehlersensor 42 repräsentierenden, eingestellten Parameter 52 abgezogen. Diese Subtraktion 53 wird von einem Signal 54 des Fehlersensors 42 ausgelöst. Die derart berechnete Differenz gibt die Anzahl von Winkelschrittgeberimpulsen an, die gewartet werden muß, bevor der Auswerfer 34 aktiviert wird. Nach Ablauf dieser Wartezeit wird ein Signal 55 zum Betätigen des Auswerfers erzeugt. Nach einer kurzen Totzeit oder gegebenenfalls auch zeitgleich erfolgt der Auswurf 56 einer Zigarettenpackung.

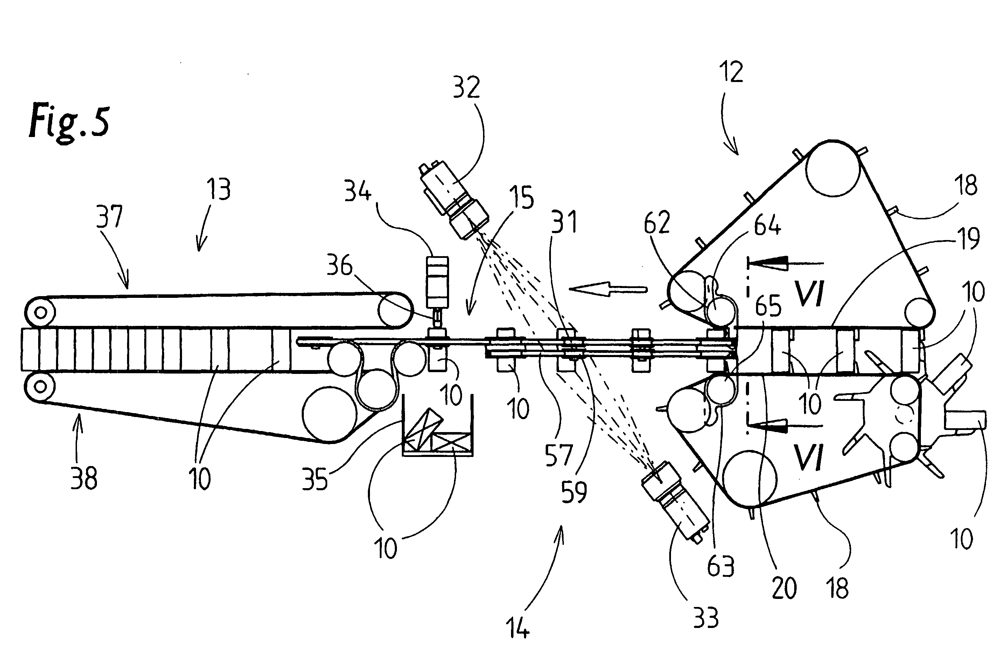

Fig. 5, Fig. 6 und Fig. 7 zeigen eine weitere Ausführungsform einer Prüfvorrichtung für (Zigaretten-)Packungen 10.

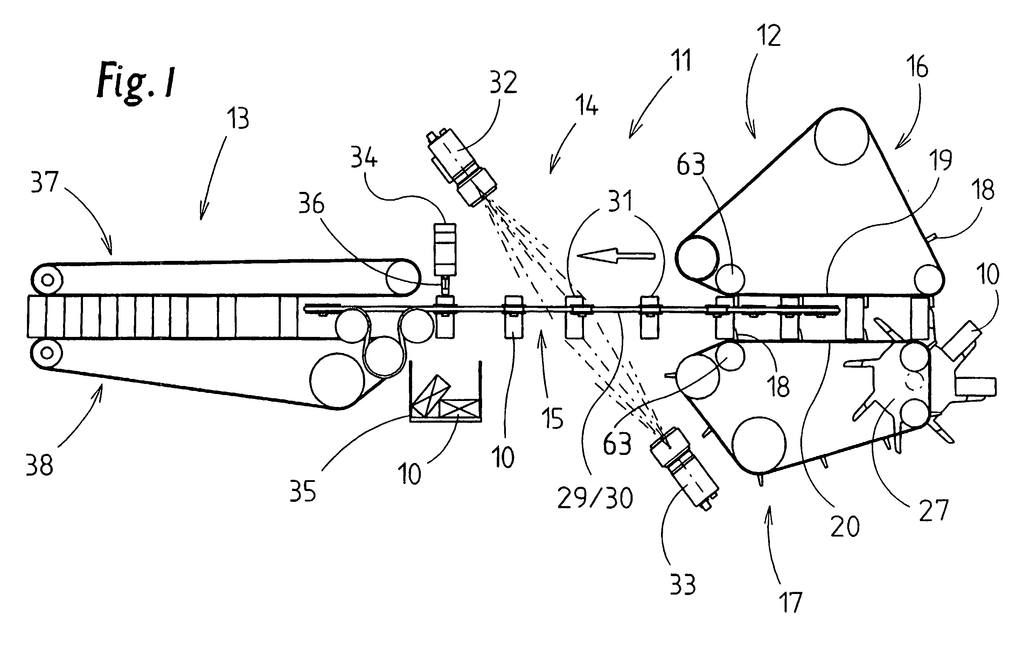

Eine Besonderheit dieser Ausführung ist die Ausbildung des Prüfförderers 15. Dieser besteht, wie das Ausführungsbeispiel der Fig. 1, aus den beiden seitlichen Rundschnüren 29, 30, die an seitlichen Stirnflächen 25, 26 der Packungen 10 anliegen. Zusätzlich ist in einem Teilbereich der Prüfstrecke 14 bzw. des Prüfförderers 15 ein zusätzliches Förderorgan angeordnet zum Erfassen der Packungen 10 in einem Bereich unterhalb der Rundschnüre 29, 30. Der zusätzliche Förderer besteht ebenfalls aus Rundschnüren 57, 58, die mit Abstand unterhalb der Rundschnüre 29, 30 und parallel zu diesen laufen. Die Rundschnüre 57, 58 werden ebenfalls durch Stützrollen 59 geführt, die gleichachsig unterhalb der Stützrollen 31 positioniert sind.

Der vorgenannte, weitere Endlosförderer für die Packungen, also die Rundschnüre 57, 58, erstreckt sich, ausgehend vom Zuförderer 12, über die eigentliche Prüfstrecke 14, endet jedoch mit Abstand vor dem Auswerfer 34. Dieser ist demnach in einem Bereich wirksam, in dem die Packungen 10 ausschließlich durch die (oberen) Rundschnüre 29, 30 gefördert werden.

Eine weitere Besonderheit ist für die Übergabe der Packungen 10 vom Zuförderer 12 an den Prüfförderer 15 verwirklicht. Der Prüfförderer, nämlich die Rundschnüre 29, 30 und die Rundschnüre 57, 58, enden bei diesem Ausführungsbeispiel im Bereich von Umlenkrollen 60, 61 der Fördertrume 19, 20 des Zuförderers 12. Um eine zuverlässige und vor allem positionsgenaue Übergabe der Packungen 10 vom Zuförderer 12 an den Prüfförderer 15 zu gewährleisten, sind besondere Übergabeorgane im Bereich der Umlenkrollen 60, 61 positioniert. Diese sind so ausgebildet, daß sie die Packungen 10 im Bereich der Rückseite 22 erfassen und unter Beschleunigung in den Bereich der Rundschnüre 29, 30; 57, 58 einführen.

Bei diesen Übergabeorganen handelt es sich um drehend angetriebene Flügelräder 62, 63, die im Bereich der Fördertrume 19, 20 angeordnet sind, und zwar gleichachsig mit den Umlenkrollen 60, 61. Die Flügelräder 62, 63 werden synchron mit dem Zuförderer 12 angetrieben. Zu diesem Zweck sind die Flügelräder 62, 63 mit den Umlenkrollen 60, 61 verbunden. Diese wiederum sind als Zahnräder ausgebildet. Entsprechend bestehen die Fördertrume 19, 20 aus Zahnriemen, die mit den Zähnen der Umlenkrollen 60, 61 kämmen.

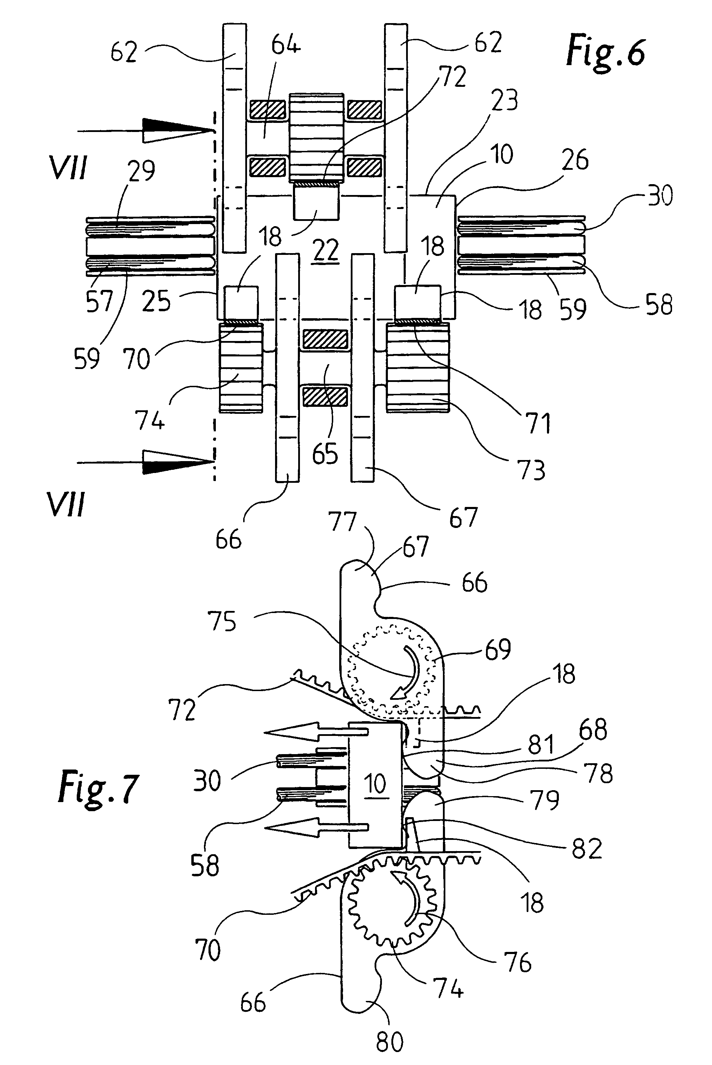

Wie aus Fig. 6 ersichtlich, sind oberhalb und unterhalb der Bewegungsbahn der Packungen 10, nämlich im Bereich der Fördertrume 19 und 20, je zwei auf einer gemeinsamen Achse bzw. Welle 64, 65 gelagerte Flügelräder 62, 63 vorgesehen. Die oberen Flügelräder 62 sind mit einem größeren Abstand voneinander angeordnet und erfassen demnach die Packungen 10 in einem zu den Stirnflächen 25, 26 benachbarten Bereich der Rückseite 22. Die unteren Flügelräder 63 weisen einen geringeren Abstand voneinander auf und erfassen die Packungen 10 in einem mittleren Bereich der Rückseite 22.

Die Flügelräder 62, 63 sind in besonderer Weise ausgebildet. Jedes Flügelrad 62, 63 besteht aus mehreren, nämlich zwei einander annähernd diametral gegenüberliegenden Flügeln 66, 67. Diesen werden bei der Drehung der Flügelräder 62, 63 von oben und unten gegen die Rückseite 22 der Packungen 10 bewegt. Die den Packungen 10 zugekehrte Seite der Flügel 66, 67 ist S-förmig ausgebildet mit einem ballig ausgebildeten Vorsprung 68. Dieser kommt an der Rückseite 22 zur Anlage.

Zur Gewährleistung einer exakten, aufrechten Position der Packungen 10 werden diese auch im Bereich der nach oben und unten gerichteten Seitenflächen 23, 24 justierend erfaßt. Zu diesem Zweck weisen die Flügelräder 62, 63 ein kreisflächenförmiges Mittelteil 69 auf. Die Flügel 66, 67 sind versetzt zur Drehachse der Flügelräder 62, 63 mit diesem Mittelteil 69 verbunden. Ein Teilstück der (kreisförmigen) Umfangsfläche des Mittelteils 69 liegt bei der Übergabe der Packungen 10 an den Prüfförderer 15 an diesen oberen und unteren Seitenflächen 23, 24 an (Fig. 7).

Eine weitere Besonderheit ist die Ausgestaltung des Zuförderers 12 bei diesem Ausführungsbeispiel. Wie aus Fig. 6 ersichtlich, besteht der Untergurt 17 aus zwei im Abstand voneinander liegenden Einzelgurten 70, 71. Diese sind mit unterschiedlicher Breite ausgebildet, um eine optimale Führung der Packungen 10, auch bei unterschiedlicher Größe, zu gewährleisten. Die unteren Flügelräder 63 sind zwischen den beiden, den Einzelgurten 70, 71 zugeordneten Umlenkrollen 61 angeordnet.

Der Obergurt 16 besteht aus einem Einzelgurt 72, der etwa mittig bzw. geringfügig versetzt zur Mitte der Packungen 10 und der Einzelgurte 70, 71 verläuft. Der Einzelgurt 72 ist über eine einzelne Umlenkrolle 60 geführt. Die beiden Flügelräder 62 sind zu beiden Seiten des Einzelgurts 72 angeordnet.

### Bezugszeichenliste:

- 10: Packung
- 11: Förderstrecke
- 12: Zuförderer
- 13: Abförderer
- 14: Prüfstrecke
- 15: Prüfförderer
- 16: Obergurt
- 17: Untergurt
- 18: Mitnehmer
- 19: Fördertrum
- 20: Fördertrum
- 21: Vorderseite
- 22: Rückseite
- 23: Seitenfläche
- 24: Seitenfläche
- 25: Stirnfläche
- 26: Stirnfläche
- 27: Sternrad
- 28: Mitnehmer
- 29: Rundschnur
- 30: Rundschnur
- 31: Stützrolle
- 32: Kamera
- 33: Kamera
- 34: Auswerfer
- 35: Auffangbehälter
- 36: Stößel
- 37: Fördergurt
- 38: Fördergurt
- 39: Aktivierungssensor
- 40: Spiegel
- 41: Lichtstrahl
- 42: Fehlersensor
- 43: Abstand
- 44: Abstand
- 45: Auswertefenster
- 46: Winkelschrittgeber
- 47: Abstand
- 48: Meßwert Impulse pro Sekunde
- 49: Reaktionszeit
- 50: Multiplizierer
- 51: Korrekturwert
- 52: Parameter
- 53: Subtraktion
- 54: Signal des Fehlersensors
- 55: Signal für Auswerfer
- 56: Auswurf
- 57: Rundschnur
- 58: Rundschnur
- 59: Stützrolle
- 60: Umlenkrolle
- 61: Umlenkrolle
- 62: Flügelrad
- 63: Flügelrad
- 64: Welle
- 65: Welle
- 66: Flügel
- 67: Flügel
- 68: Vorsprung
- 69: Mittelteil
- 70: Einzelgurt
- 71: Einzelgurt
- 72: Einzelgurt

## Patentansprüche

1. Verfahren zum Prüfen von Packungen (10), insbesondere Zigaretten-Packungen, hinsichtlich korrekter Ausgestaltung des äußeren Erscheinungsbildes, wobei die Packungen (10) durch einen Förderer entlang einer Prüfstrecke (14) transportiert werden und ortsfeste Prüforgane, insbesondere an mindestens einer Kamera (32, 33), vorbeibewegt und fehlerhafte Packungen (10) im Anschluss an die Prüforgane durch einen Auswerfer (34) aus dem Förderweg der Packungen (10) ausgesondert werden und wobei die Prüforgane taktweise aktiviert werden zum Erfassen jeweils einer an den Prüforganen vorbeibewegten Packung (10), wobei die Prüforgane durch einen Aktivierungssensor (39) eingeschaltet werden, der durch die zu überprüfende Packung (10) beaufschlagt wird, **dadurch gekennzeichnet, dass** der Auswerfer (34) durch einen Fehlersensor (42) betätigt wird, der durch eine an dem Fehlersensor (42) vorbeibewegte fehlerhafte Packung (10) beaufschlagt wird, wobei der Auswerfer (34) mit einer zeitlichen Verzögerung betätigt wird, die in Abhängigkeit von der Arbeitsgeschwindigkeit der Verpackungsmaschine veränderbar ist.

2. Verfahren nach Anspruch 1, **dadurch gekennzeichnet, dass** die zeitliche Verzögerung nach Maßgabe eines Winkelschrittgebers (46) im Bereich eines die Packungen (10) zuführenden Vorförderers, insbesondere eines Sternrads (27), veränderbar ist.

3. Verfahren nach Anspruch 2, **dadurch gekennzeichnet, dass** der Fehlersensor (42) ständig aktiv ist und alle vorbeigeförderten Packungen (10) hinsichtlich eines korrekten, vorgegebenen Abstands der Packungen (10) voneinander erfasst werden und dass bei einer fehlerhaften Packung (10) von den Prüforganen - Kameras (32, 33) - der Auswerfer (34) mit einem Signal beaufschlagt wird, derart, dass der Auswerfer (34) tätig wird, wenn die fehlerhafte Packung (10) an dem Fehlersensor (42) vorbeibewegt wird.

4. Verfahren nach Anspruch 2 oder einem der weiteren Ansprüche, **dadurch gekennzeichnet, dass** der Fehlersensor (42) mit einem, insbesondere örtlichen bzw. zeitlichen, Auswertefenster (45) arbeitet, derart, dass (fehlerhafte) Packungen (10) erfasst bzw. berücksichtigt werden, die innerhalb eines vorgegebenen Abstandes bzw. einer vorgegebenen Zeitspanne in den Wirkungsbereich des Fehlersensors (42) eintreten.

5. Verfahren nach Anspruch 1, **dadurch gekennzeichnet, dass** das Auswertefenster (45) in Abhängigkeit von der Arbeitsgeschwindigkeit der Verpackungsmaschine veränderbar ist.

6. Vorrichtung zum Prüfen von Packungen (10), insbesondere Zigaretten-Packungen, hinsichtlich der korrekten Ausgestaltung des äußeren Erscheinungsbildes, wobei die Packungen (10) durch einen Prüfförderer (15) im Bereich einer Prüfstrecke (14) mit Abstand voneinander transportierbar und im Bereich der Prüfstrecke (14) optoelektronische Prüforgane positioniert sind, insbesondere mindestens eine Kamera (32, 33) zum Erfassen des äußeren Erscheinungsbildes einer Packung (10), wobei bei fehlerhafter Packung (10) ein im Anschluss an die Prüforgane angeordneter Auswerfer (34) betätigbar ist zum Ausstoßen der fehlerhaften Packung (10) aus dem Förderweg der Packungen (10), und wobei den Prüforganen ein Aktivierungssensor (39) im Bereich der Prüfstrecke (14) vorgeordnet ist, wobei der Aktivierungssensor (39) durch eine vorbeibewegte Packung (10) beaufschlagbar ist und unmittelbar die Prüforgane einschaltbar sind, **dadurch gekennzeichnet, dass** der Auswerfer (34) durch einen Fehlersensor (42) betätigbar ist, der durch eine am Fehlersensor (42) vorbeibewegte fehlerhafte Packung (10) beaufschlagbar ist und dass der Auswerfer (34) mit einer zeitlichen Verzögerung betätigbar ist, die in Abhängigkeit von der Arbeitsgeschwindigkeit der Verpackungsmaschine veränderbar ist.

7. Vorrichtung nach Anspruch 6, **dadurch gekennzeichnet, dass** die Packungen (10) im Bereich der Prüfstelle (14) (ausschließlich) durch zwei einander gegenüberliegende Endlosförderer als Prüfförderer (15) transportierbar sind, insbesondere durch Rundschnüre (29, 30), die an seitwärts gerichteten Packungsflächen anliegen, insbesondere an (kleinen) Stirnflächen (25, 26), und zwar in einem oberen Flächenbereich derselben.

8. Vorrichtung nach Anspruch 7, **dadurch gekennzeichnet, dass** die Endlosförderer für die Packungen (10) mindestens in einem ersten Teilbereich der Prüfstrecke (14) aus mehreren, insbesondere zwei übereinanderliegenden Förderern bzw. Rundschnüren (29, 30; 60, 61) bestehen, wobei beide Rundschnüre (29, 30; 57, 58) an den seitwärts gerichteten Packungsflächen, insbesondere an den Stirnflächen (25, 26), anliegen.

9. Vorrichtung nach Anspruch 8 oder einem der weiteren Ansprüche, **dadurch gekennzeichnet, dass** die Packungen (10) im Bereich des Auswerfers (34) lediglich durch zwei einander gegenüberliegende Endlosförderer, insbesondere Rundschnüre (29, 30), förderbar sind.

10. Vorrichtung nach Anspruch 6 oder einem der weiteren Ansprüche, **dadurch gekennzeichnet, dass** dem Prüfförderer (15), insbesondere den Rundschnüren (29, 30), ein Zuförderer (12) vorgeordnet ist mit vorzugsweise oberhalb und unterhalb der Bewegungsbahn der Packungen (10) verlaufenden, an nach oben bzw. unten gerichteten Seitenflächen (23, 24) der Packungen (10) anliegenden Fördertrumen (19, 20) und dass die Packungen (10) durch den Zuförderer (12) bis in den Anfangsbereich des Prüfförderers (15) transportierbar und an diesen übergebbar sind, wobei im Bereich des Übergangs vom Zuförderer (12) zum Prüfförderer (15) ein die Packungen (10) jeweils an einer Rückseite (22) erfassender Übergabeförderer angeordnet ist zum positionsgerechten Einführen der Packungen (10) in den Prüfförderer (15).

11. Vorrichtung nach Anspruch 10, **dadurch gekennzeichnet, dass** der Übergabeförderer aus Flügelrädern (62, 63) besteht, insbesondere aus je zwei die Packungen (10) an der Rückseite (22) paarweise erfassenden oberen und unteren Flügelrädern (62, 63), wobei die Flügelräder (62, 63) synchron mit dem Zuförderer (12) drehbar sind und jeweils mit einem Flügel (66, 67) gleichzeitig von oben und unten die Packung (10) erfassen.

12. Vorrichtung nach Anspruch 11, **dadurch gekennzeichnet, dass** die Flügelräder (62, 63) die Packungen im Bereich der Rückseite (22) jeweils mit einem ballig geformten Vorsprung (68) erfassen und mit einem querliegenden, kreisförmigen Mittelteil (69) nach oben und unten gerichtete Flächen der Packung (10), insbesondere Seitenflächen (23, 24), führen.

13. Vorrichtung nach Anspruch 11 oder einem der weiteren Ansprüche, **dadurch gekennzeichnet, dass** die Packungen (10) durch die Flügel (66, 67) die Packungen (10) mit einer Fördergeschwindigkeit in den Bereich des Zuförderers (12) einführen, die höher ist als die Fördergeschwindigkeit des Zuförderers (12).

## Claims

1. Method of checking packs (10), in particular cigarette packs, for the correct configuration of their outer appearance, it being the case that the packs (10) can be transported by a conveyor along a checking section (14) and are moved past stationary checking means, in particular at least one camera (32, 33), and defective packs (10) are separated out of the conveying path of the packs (10) by an ejector (34) downstream of the checking means, and that the checking means are cyclically activated for the purpose of registering each pack (10) moved past the checking means, and that the checking means can be switched on by an activating sensor (39), which is actuated by the pack (10) which is to be checked, **characterized in that** the ejector (34) is activated by a defect sensor (42), which is actuated by a defective pack (10) moved past the defect sensor (42), the ejector (34) being activated with a time delay that can be altered in dependence on the operating speed of the packaging machine.

2. Method according to Claim 1, **characterized in that** the time delay can be altered in accordance with an angular encoder (46) in the region of a preliminary conveyor, in particular a star wheel (27), which feeds in the packs (10).

3. Method according to Claim 2, **characterized in that** the defect sensor (42) is active at all times, and all the packs (10) conveyed past it are sensed for the purpose of determining a correct, predetermined spacing between the packs (10), and **in that**, in the case of a defective pack (10), the ejector (34) receives a signal from the checking means - cameras (32, 33) - such that the ejector (34) becomes active when the defective pack (10) is moved past the defect sensor (42).

4. Method according to Claim 2 or one of the further Claims,, **characterized in that** the defect sensor (42) works with a, in particular positional or temporal, evaluation window (45) such that (defective) packs which enter into the region of action of the defect sensor (42) within a predetermined spacing or a predetermined time span are sensed or taken into account.

5. Method according to Claim 1, **characterized in that** the evaluation window (45) can be changed in dependence on the operation speed of the packaging machine.

6. Apparatus for checking packs (10), in particular cigarette packs, with the correct configuration of their outer appearance, it being the case that the packs can be transported by a checking conveyor (15) in the region of a checking section (14) at a spacing from one another, and positioned in the region of the checking section (14) are optoelectronic checking means, in particular at least one camera (32, 33) for the purpose of registering the outer appearance of a pack (10), and, in the case of a defective pack (10), an ejector (34) arranged downstream of the checking means can be actuated for the purpose of discharging the defective pack (10) from the conveying path of the packs (10), and that an activating sensor (39) in the region of the checking section (14) is located upstream of the checking means, it being the case that the activating sensor (39) can be activated by a pack (10) moved past it and the checking means can be immediately switched on, **characterized in that** the ejector (34) can be activated by a defect sensor (42), which can be actuated by a defective pack (10) moved past the defect sensor (42), and that the ejector (34) can be activated with a time delay that can be altered in dependence on the operating speed of the packaging machine.

7. Apparatus according to Claim 6, **characterized in that** the packs (10) in the region of the checking section (14) can be transported (exclusively) by two mutually opposed endless conveyors serving as checking conveyors (15), in particular by round bands (29, 30) which lie against the laterally directed pack surfaces, in particular on (small) end surfaces (25, 26), specifically in an upper surface area of the same.

8. Apparatus according to Claim 7, **characterized in that**, at least in a first partial region of the checking section (14), the endless conveyors for the packs (10) comprise a plurality, in particular two conveyors or round bands (20, 30; 60, 61) arranged one above the other, with the two round bands (29, 30; 57, 58) abutting the laterally directed pack surfaces, in particular the end surfaces (25, 26).

9. Apparatus according to Claim 8 or one of the further Claims, **characterized in that** the packs (10) in the region of the ejector (34) can be conveyed only by two mutually opposed endless conveyors, in particular round bands (29, 30).

10. Apparatus according to Claim 6 or one of the further Claims, **characterized in that** arranged upstream of the checking conveyor (15), in particular of the round bands (29, 30), is a feed conveyor (12) with conveying strands (19, 20) running preferably above and below the movement path of the packs (10) and lying respectively on the top and bottom side surfaces (23, 24) of the packs (10), and that the packs (10) can be transported by the feed conveyor (12) into the initial region of the checking conveyor (15) and transferred to same, with a transfer conveyor arranged in the region of transfer from the feed conveyor (12) to the checking conveyor (15) for gripping each of the packs (10) on a rear side (22) for a precisely positioned introduction of the packs (10) into the checking conveyor (15).

11. Apparatus according to Claim 10, **characterized in that** the transfer conveyor comprises vaned wheels (62, 63), in particular two upper and two lower vaned wheels (62, 63) which grip in pair-like fashion the rear side (22) of each pack (10), it being the case that the vaned wheels (62, 63) can run synchronously with the feed conveyor (12), gripping in each case the pack (10) with a vane (66, 67) simultaneously from above and from below.

12. Apparatus according to Claim 11, **characterized in that** the vane wheels (62, 63) grip the rear side (22) of each pack (10) with a crown-like projection (68) and guide the vertically oriented surfaces of the pack (10), in particular side surfaces (23, 24) with a transverse, circular-shaped middle part (69).

13. Apparatus according to Claim 11 or one of the further Claims, **characterized in that** the packs (10) are driven by the vanes (66, 67) into the region of the feed conveyor (12) at a conveying speed that is greater that the conveying speed of the feed conveyor (12).

## Revendications

1. Procédé de vérification d'emballages (10), en particulier d'emballages de cigarettes, pour vérifier si leur aspect extérieur est configuré correctement, les emballages (10) étant transportés par un dispositif de transport le long d'un parcours de vérification (14) et étant passés devant des organes de vérification fixes et en particulier devant au moins une caméra (32, 33), les emballages (10) défectueux étant ensuite écartés du parcours de transport des emballages (10) par un dispositif d'expulsion (34) situé après les organes de vérification, les organes de vérification étant activés de manière cadencée pour saisir à chaque fois un emballage (10) qui passe devant les organes de vérification, les organes de vérification étant branchés par une sonde d'activation (39) qui est activée par l'emballage (10) à vérifier, **caractérisé en ce que** le dispositif d'expulsion (34) est actionné par un détecteur de défauts (42) qui est activé par un emballage (10) défectueux qui passe devant le détecteur de défauts (42), le dispositif d'expulsion (34) étant actionné avec un retard temporel qui peut être modifié en fonction de la vitesse de travail de la machine d'emballage.

2. Procédé selon la revendication 1, **caractérisé en ce que** le retard temporel peut être modifié d'une manière définie par un dispositif d'avancement (46) par pas angulaires situé dans la zone d'un dispositif de transport amont qui apporte les emballages (10) et en particulier d'une roue en étoile (27).

3. Procédé selon la revendication 2, **caractérisé en ce que** le détecteur de défauts (42) est actif en permanence et **en ce que** l'on vérifie si l'intervalle prédéterminé entre les emballages (10) qui passent devant lui est correct et **en ce que** lorsqu'un emballage (10) est défectueux, le dispositif d'expulsion (34) reçoit des organes de vérification, à savoir des caméras (32, 33), un signal qui active le dispositif d'expulsion (34) lorsque l'emballage (10) défectueux passe devant le détecteur de défauts (42).

4. Procédé selon la revendication 2 ou l'une des autres revendications, **caractérisé en ce que** le détecteur de défauts (42) travaille dans une fenêtre locale ou temporelle d'évaluation (45) de manière à détecter et tenir compte des emballages (10) (défectueux) qui pénètrent dans la zone de travail du détecteur de défaut (42) à l'intérieur d'une distance prédéterminée ou d'un laps de temps prédéterminé.

5. Procédé selon la revendication 1, **caractérisé en ce que** la fenêtre d'évaluation (45) peut être modifiée en fonction de la vitesse de travail de la machine d'emballage.

6. Dispositif de vérification d'emballages (10), en particulier d'emballages de cigarettes, pour vérifier si leur aspect extérieur est configuré correctement, les emballages (10) pouvant être transportés à distance les uns des autres par un transporteur de vérification (15) dans la zone d'un parcours de vérification (14), des organes optoélectroniques de vérification étant disposés dans la zone du parcours de vérification (14) et étant en particulier constitués d'au moins une caméra (32, 33) qui détecte l'aspect extérieur d'un emballage (10), et dans lequel, lorsqu'un emballage (10) est défectueux, un dispositif d'expulsion (34) disposé à la suite des organes de vérification peut être actionné pour expulser l'emballage (10) défectueux hors du parcours de transport des emballages (10), une sonde d'activation (39) étant disposée en amont des organes de vérification dans la zone du parcours de vérification (14), la sonde d'activation (39) pouvant être activée par un emballage (10) qui passe devant elle et les organes de vérification pouvant être raccordés immédiatement, **caractérisé en ce que** le dispositif d'expulsion (34) peut être actionné par un détecteur de défauts (42) qui est activé par un emballage (10) défectueux qui passe devant le détecteur de défauts (42) et **en ce que** le dispositif d'expulsion (34) peut être actionné avec un retard temporel qui peut être modifié en fonction de la vitesse de travail de la machine d'emballage.

7. Dispositif selon la revendication 6, **caractérisé en ce que** dans la zone des emplacements de vérification (14), les emballages (10) peuvent être transportés (exclusivement) par deux transporteurs sans fin qui se font mutuellement face et qui servent de transporteurs de vérification (15), en particulier par des cordons ronds (29, 30) qui reposent sur les surfaces latérales de l'emballage, et en particulier sur l'une de leurs (petites) surfaces frontales (25, 26), et ce dans une zone supérieure de cette surface.

8. Dispositif selon la revendication 7, **caractérisé en ce que** les transporteurs sans fin prévus pour les emballages (10) sont constitués au moins dans une première partie du parcours de vérification (14) de plusieurs transporteurs ou cordons ronds (29, 30; 60, 61) disposés les uns au-dessus des autres, les deux cordons ronds (29, 30; 57, 58) reposant sur les surfaces latérales de l'emballage et en particulier sur leurs surfaces frontales (25, 26).

9. Dispositif selon la revendication 8 ou l'une des autres revendications, **caractérisé en ce que** dans la zone du dispositif d'expulsion (34), les emballages (10) sont transportés uniquement par deux transporteurs sans fin situés l'un en face de l'autre et en particulier des cordons ronds (29, 30).

10. Dispositif selon la revendication 6 ou l'une des autres revendications, **caractérisé en ce qu'**un transporteur d'alimentation (12), en particulier constitué de cordons ronds (29, 30), est prévu en amont du transporteur de vérification (15) et présente des brins de transport (19, 20) qui s'étendent de préférence au-dessus et en dessous du parcours de déplacement des emballages (10) et qui reposent contre les surfaces latérales (23, 24) orientées vers le haut ou vers le bas des emballages (10), et **en ce que** les emballages (10) peuvent être transportés par ledit transporteur d'alimentation (12) jusque dans la partie initiale du transporteur de vérification (15) et peuvent y être transférés, un transporteur de transfert qui saisit les emballages (10) sur leur côté arrière (22) étant disposé dans la zone de transition entre le transporteur d'alimentation (12) et le transporteur de vérification (15) pour insérer les emballages (10) en position correcte dans le transporteur de vérification (15).

11. Dispositif selon la revendication 10, **caractérisé en ce que** le transporteur de transfert est constitué de roues à aubes (62, 63) et en particulier de deux roues à aubes (62, 63), à savoir une roue supérieure et une roue inférieure appariées qui saisissent les emballages (10) sur leur côté arrière (22), les roues à aubes (62, 63) pouvant tourner en synchronisme avec le transporteur d'alimentation (12) et saisissant l'emballage (10) simultanément par le haut et par le bas, chaque fois par une aube (66, 67).

12. Dispositif selon la revendication 11, **caractérisé en ce que** les roues à aubes (62, 63) saisissent les emballages dans la zone de leur côté arrière (22), chacune par une saillie (68) bombée, et guident les surfaces de l'emballage (10) orientées vers le haut et vers le bas, et en particulier leurs surfaces latérales (23, 24), par une partie centrale transversale (69) de forme circulaire.

13. Dispositif selon la revendication 11 ou l'une des autres revendications, **caractérisé en ce que** les aubes (66, 67) introduisent les emballages (10) dans la zone du dispositif de transport (12) à une vitesse de transport qui est supérieure à la vitesse de transport du dispositif d'alimentation (12).
